Europäisches Patentamt

European Patent Office

Office européen des brevets

(19)

(11) Publication number: **0 127 085**
**A2**

(12) **EUROPEAN PATENT APPLICATION**

(21) Application number: **84105648.4**

(22) Date of filing: **17.05.84**

(51) Int. Cl.³: **B 60 K 41/28**
**B 60 K 41/02, F 16 H 9/18**

(30) Priority: **27.05.83 JP 92416/83**
**27.05.83 JP 92419/83**

(43) Date of publication of application:
**05.12.84 Bulletin 84/49**

(84) Designated Contracting States:
**DE FR GB IT**

(71) Applicant: **NISSAN MOTOR COMPANY, LIMITED**
**No.2, Takara-cho, Kanagawa-ku**
**Yokohama-shi Kanagawa-ken 221(JP)**

(72) Inventor: **Oshiage, Katsunori**
**No. 3-68, Oppama-higashicho**
**Yokosuka City(JP)**

(74) Representative: **Patentanwälte Grünecker, Dr.**
**Kinkeldey, Dr. Stockmair, Dr. Schumann, Jakob, Dr.**
**Bezold, Meister, Hilgers, Dr. Meyer-Plath**
**Maximilianstrasse 58**
**D-8000 München 22(DE)**

(54) Control device for hydraulic automatic clutch.

(57) A hydraulic automatic clutch is controlled such that it is kept in a slightly engaged state when a brake is released under a condition where an engine idles when a vehicle is at a standstill, whereas it is completely released when the brake is applied under the condition where the engine idles when the vehicle is at a standstill. In addition to this control, the idle speed of the engine is decreased when the clutch is completely released under the condition where the engine idles when the vehicle is at a standstill.

FIG.4

EP 0 127 085 A2

## CONTROL DEVICE FOR HYDRAULIC AUTOMATIC CLUTCH

CROSS REFERENCE TO RELATED APPLICATION

U.S. patent application Ser. No. 543,838 (our ref.: U081-83) filed on October 20, 1983 which is incorporated by reference in its entirety, particular attention be made to FIGS. 1, 25A, 25B, 26 and 27 thereof. This U.S. patent application has a corresponding European patent application No. 83110546 filed October 21, 1983.

BACKGROUND OF THE INVENTION

The present invention relates to a control device for a vehicle having a hydraulic automatic clutch.

In the case of a vehicle having an automatic clutch which is hydraulically actuated, it is necessary to smoothly engage the clutch upon starting the vehicle. For smooth engagement of the clutch, it is conceivable to increase a clutch supply oil pressure (i.e., an oil pressure supplied to a clutch), with which the clutch is engaged, in accordance with an engine speed. However, the automatic clutch mentioned above poses a problem as follows. That is, although the clutch supply oil pressure must be low enough to release the engagement of the clutch when the engine idles and the vehicle is at a standstill, if the clutch supply oil pressure is excessively lower than a value at which the clutch starts engaging, it takes a considerable time until the clutch engages, allowing the engine to race. If, on the other hand, the clutch supply oil pressure at engine idling is set at a value just prior to initiation of the clutch engagement, there takes place an event where the clutch supply oil pressure will exceed the oil pressure value at which the clutch starts engaging owing to a variation in the idle speed (the idle speed increases when a choke is used or an air conditioner is used), thereby causing the vehicle to start unintentionally. For the purpose of solving the problem as above, it is conceivable to maintain the clutch in a pre-start state, i.e., a state where the clutch is kept in a predetermined slightly engaged state, by regulating the oil pressure supplied to the clutch, under a condition where the engine is idling and the vehicle is at a standstill). However, in this case, a traction torque due to the slight engagement of the clutch is exerted as a load on the engine. Thus, in order to prevent the occurrence of engine stall or engine vibration during the idle operation, it is necessary to adjust the idle speed of the engine to an idle speed higher than normal idle speed, thus posing a problem that the fuel consumption increases during the idle operation.

SUMMARY OF THE INVENTION

An object of the present invention is to provide a control device which provides a better fuel economy during idle operation of the engine.

One aspect of the present invention resides in that a hydraulic automatic clutch is completely released under a condition where a vehicle does not start immediately, although it maintains the hydraulic automatic clutch in slightly engaged state under a condition where the vehicle is about to start.

Another aspect of the present invention resides in that in addition to completely releasing the hydraulic automatic clutch, an idle speed of the engine is adjusted to a low idle speed.

BRIEF DESCRIPTION OF THE DRAWINGS

Fig. 1 is a diagrammatic view of a vehicular continuously variable transmission;

Fig. 2 is a view showing the overall of a control system;

Fig. 3 is a block diagram of a control unit;

Fig. 4 is a view showing a flowchart of a control routine for a force motor;

Fig. 5 is a view showing an idle adjusting device;

Fig. 6 is a view showing a flowchart of a control routine for a force motor and an idle adjusting device; and

Fig. 7 is a view showing another idle adjusting device.

DESCRIPTION OF THE EMBODIMENTS

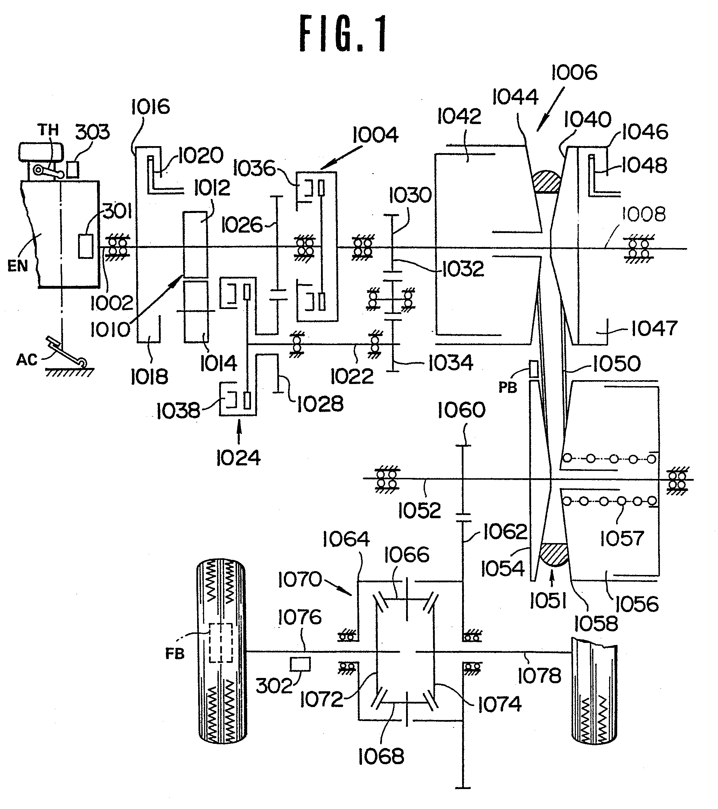

Referring to Figs. 1 to 4, a first embodiment according to the present invention is described.

Referring to Fig. 1, a vehicle having an engine EN with a throttle TH which opens in degrees as an accelerator pedal AC is depressed and a continuously variable transmission. The vehicle has a foot operated brake FB and a parking brake PB which are diagrammatically shown.

As shown in Fig. 1, the continuously variable transmission provided with a forward clutch 1004 and a reverse clutch 1024, each of which is a hydraulic automatic clutch. This continuously variable transmission is able to transmit rotation of an input shaft 1002, via a drive pulley 1006, a V-belt 1050, a driven pulley 1051 and etc., to output shafts 1076 and 1078 when the forward clutch 1004 or the reverse clutch 1024 is engaged. This continuously variable

-4-

transmission comprises input shaft 1002, forward clutch 1004, drive pulley 1006, a drive shaft 1008, an oil pump 1010, a drive gear 1012, a driven gear 1014, a rotatable flume 1016, an oil reservoir 1018, a pitot tube 1020, an auxiliary shaft 1022, reverse clutch 1024, gears 1026, 1028, 1030, 1032 and 1034, piston chambers 1036 and 1038, a fixed conical disc 1040, a drive pulley cylinder chamber 1042, a movable conical disc 44, a rotatable flume 1046, an oil reservoir 1047, a pitot tube 1048, a V-belt 1050, a driven pulley 1051, a driven shaft 1052, a fixed conical disc 1054, a driven pulley cylinder chamber 1056, a spring 1057, a movable conical disc 1058, a gear 1060, a ring gear 1062, a differential case 1064, pinion gears 1066 and 1068, a differential 1070, side gears 1072 and 1074, and output shafts 1076 and 1078. The detailed description of theses elements is omitted. That portion of the construction which description has been omitted is described in the co-pending U.S. patent application Ser. No. 543,838 which corresponds to the European patent application No. 83110546.

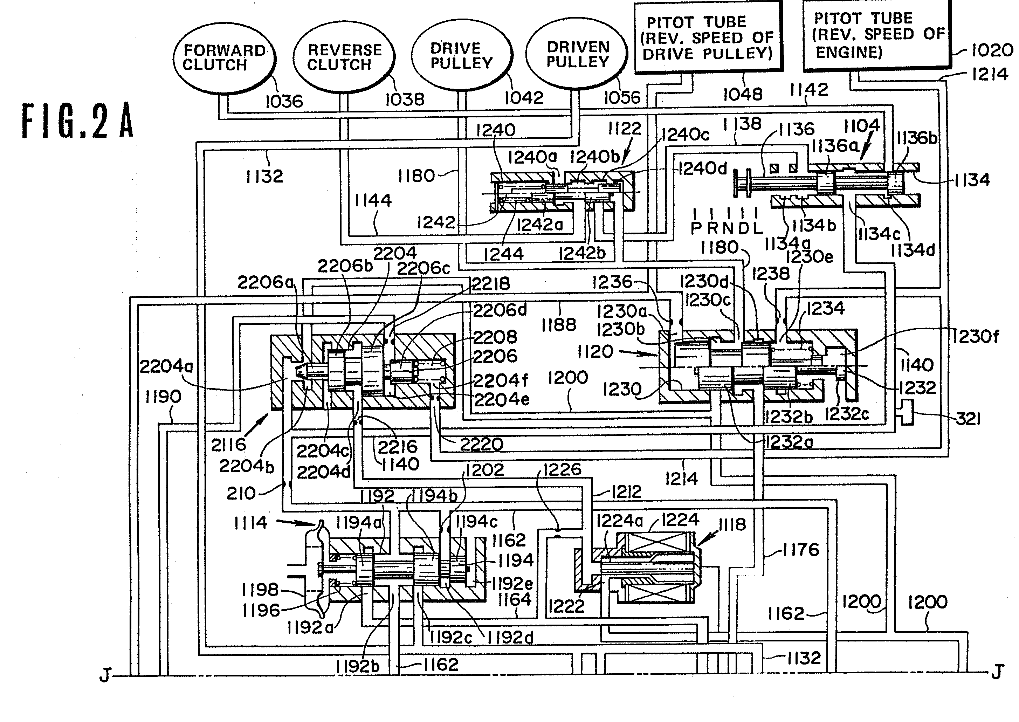

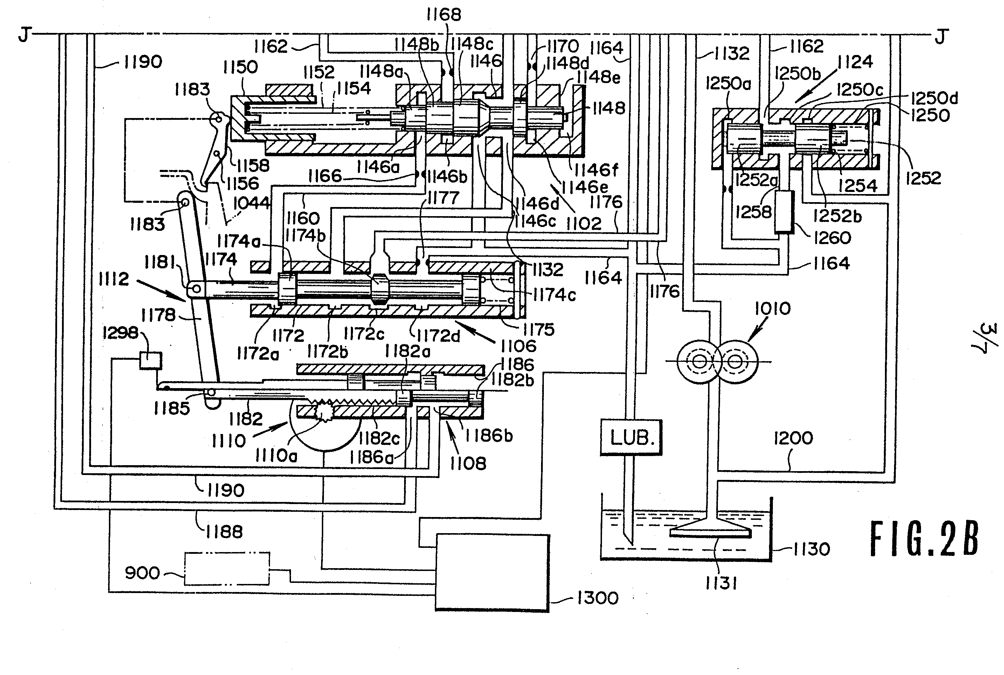

Figs. 2A and 2B show a control system, including a control device according to the present invention, for the continuously variable transmission. As shown in Figs. 2A and 2B, the control system for the continuously variable transmission comprises an oil pump 1010, a line pressure regulator valve 1102, a manual valve 1104, a shift control valve 1106, a clutch complete engagement control valve 1108, a shift motor (a stepper motor) 1110, a shift operating mechanism 1112, a throttle valve 1114, a starting valve 2116, a start adjustement valve 1118, a maximum reduction ratio maintaining valve 1120, a reverse inhibitor valve 1122, a lubrication valve 1124, a tank 1130, an electronic control unit 1300 and etc., and they are interconnected as illsutrated and connected also to the piston chamber 1036 of the forward clutch 1004, the piston chamber 1038 of the reverse clutch 1024, the drive pulley cylinder chamber 1042, the driven pulley cylinder chamber 1056 and pitot tubes 1020 and 1048. Hereinafter, detailed description is made for the starting valve 2116, start adjustment valve 1118 and their directly associated portions, but the other valves are not described in detail. The construction of that portion which has been omitted is described in the before mentioned U.S. patent application Ser. No 543,838.

The starting valve 2116 comprises a valve bore 2204 provided with ports 2204a, 2204b, 2204c, 2204d, 2204e and 2204f, a spool 2206 having thereon lands 2206a, 2206b, 2206c and 2206d (the land 2206a has a tapered portion on the lefthand side thereof), and a spring 2208 biasing the spool 2206 to the left, as viewed in the Fig. 2A. The port 2204a communicates with the oil conduit 1140 which connects via an orifice 1210 with the oil conduit 1162 forming the throttle pressure circuit. The port 2204b is drained through the oil conduit 1200 forming a drain circuit (this oil conduit 1200 communicating with a portion between the oil pump 1010 and the strainer 1131). The port 2204c is a drain port, too. The port 2204d is connected via the oil conduit 1212 with the start adjusting valve 1118. The port 2204e communicates via the oil conduit 1190 with the port 1186b of the clutch complete engagement control valve 1108 (see Fig. 2B). The port 2204f communicates via the oil conduit 1214 with the pitot tube 1020. That is, the signal oil pressure indicative of revolution speed of the input shaft 1002 (i.e., the engine speed signal oil pressure) is supplied to the port 2204f. The ports 2204d, 2204e and 2204f have at their inlets orifices 2216, 2218 and 2220, respectively. The starting valve 2116 has a pressure reducing function to generate an oil pressure (start pressure) within the oil conduit 1140 by discharging oil in the port 2204a toward the port 2204b depending upon the position of the spool 2206. If the spool 2206 is disposed to the left as viewed in Fig. 2A, the oil pressure at the port 2204a is relatively high because a clearance passage from the port 2204a to the port 2204b is narrow, while if the spool 2206 has moved to the right, the oil pressure at the port 2204a drops because the clearance passage from the port 2204a to the port 2204b becomes wide and the amount of oil drainage increases. Since the oil conduit 1162 forming the throttle pressure circuit communicates via the orifice 1210 with the oil conduit 1140 forming the start pressure circuit, the throttle pressure in the oil conduit 1162 is not substantially affected even if the oil pressure in the oil conduit 1140 drops. The position of the spool 2206 is determined on the balance of rightwardly directed force by oil pressure (start adjustment pressure) in the port 2204a acting on the land 2206a and by the oil pressure (start adjustment pressure) acting on the differential area between the lands 2206b and 2206c with the total of leftwardly directed force due to oil pressure (drive pulley revolution speed signal oil pressure) in the port 2204e acting on the differential area between the lands 2206c and 2206d and the leftwardly directed force due to oil pressure (engine revolution speed signal oil pressure) in the port 2204f acting on the 2206d. That is, the higher the start adjustment pressure in the oil conduit 2212 generated by the later described start adjusting valve 1118, the lower the start pressure in the oil conduit 1140 becomes, and the higher the engine speed signal oil pressure and/or the drive pulley revolution speed signal oil pressure, the higher the start pressure beomes. Upon starting the vehicle, the rod of the clutch complete engagement control valve 1108 is disposed to the leftmost position and the oil conduit 1190 is drained so that the drive pulley revolution speed oil pressure signal does not act in the port 2204e of the starting valve 2116. Accordingly, the start pressure is controlled in response to the start adjustment pressure and engine speed signal oil pressure and thus gradually increases as the engine speed increases. This start pressure is supplied to the forward clutch 1004 (or reverse clutch 1024), rendering the clutch to engage gradually, thus permitting the vehicle to start moving smoothly. As the vehicle has started, the clutch complete engagement control valve 1108 is rendered to switch by the action of the stepper motor 1110, delivering through the oil conduit 1190 the drive pulley revolution speed signal pressure to the port 2204e, causing the start pressure to increase rapidly. With this rapid increase in the start pressure, the forward clutch 1004 (or reverse clutch 1024) is firmly engaged and thus become free from slipping.

The start adjusting valve 1118 comprises a force motor 1224 which regulates the rate of flow of oil discharged from the oil conduit 1212 to the port 1222 (this port 1222 communicating with the oil conduit 1200 forming the drain circuit) by a plunger 1224a. To the oil conduit 1212, an oil under low pressure is supplied via an orifice 1226 from the oil conduit 1164 forming the lubrication circuit. The oil pressure (start adjustment pressure) in the oil conduit 1212 is controlled in response to the amount of current passing through the force motor 1224 because the force motor 1224 discharges the oil from the oil conduit 1212 inversely proportional to the amount of current passing therethrough. The amount of current passing through the force motor 1224 is controlled in the later described manner by the control unit 1300. When the engine is idling and the vehicle is at a standstill, with the start adjustment pressure provided by this start adjusting valve 1118, the start pressure (the pressure resulting from the regulation in the starting valve 2116) is adjusted to a pressure state which maintains the forward clutch 1004 or reverse clutch 1024 in a predetermined slightly engaged state (under a condition where a brake is not used) or in a completely released state (under a condition where the brake is used), which will be later described.

Next, an explanation is made regarding the control unit 1300 which controls the stepper motor 1110 and the force motor 1224.

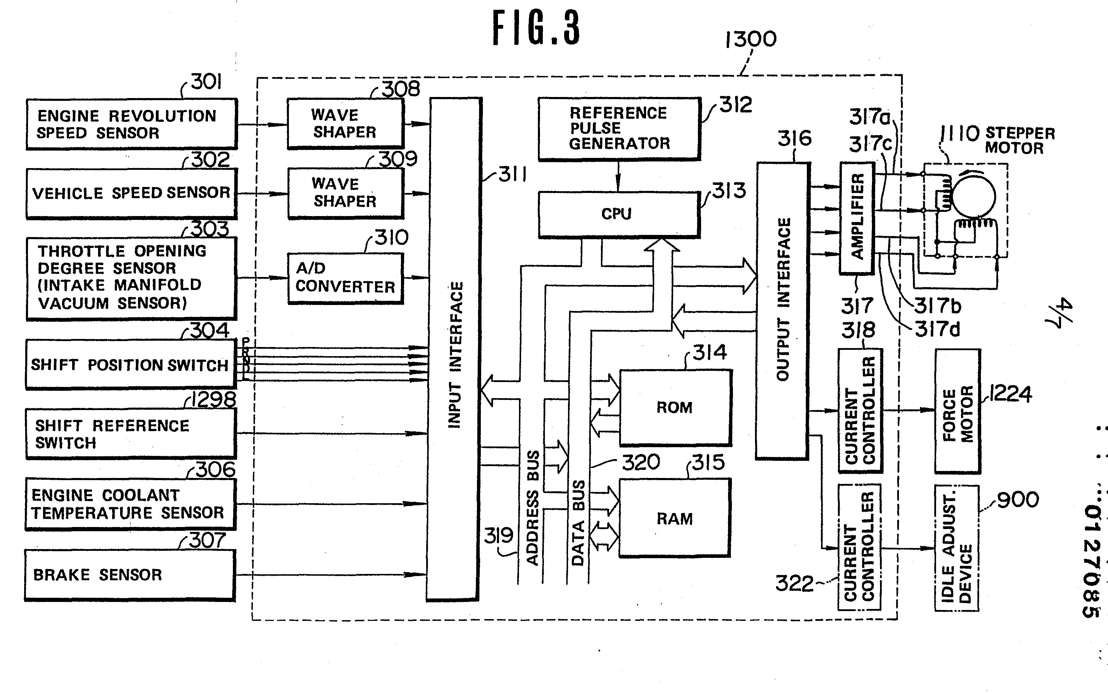

As shown in Fig. 3, the control unit 1300 receives as inputs thereto electric signals from an engine revolution speed sensor 301, a vehicle speed sensor 302, a throttle opening degree sensor (or an intake manifold sensor) 303, a shift position switch 304, a shift reference switch 1298, an engine coolant temperature sensor 306, and a brake sensor 307. The engine revolution speed sensor 301 detects an engine revolution speed by measuring the number of ignition spark pluses of the engine, and the vehicle speed sensor 302 detects a vehicle speed by measuring the revolution of the output shaft of the continuously variable transmission. The throttle opening degree sensor (or intake mainifold vacuum sensor) 303 detects the engine throttle opening degree in terms of an electric voltage signal (in the case of the intake manifold vacuum sensor, the intake manifold vacuum is detected in terms of an electric voltage signal). The shift position switch 304 detects which one of range positions, namely, P, N, D, and L, the before mentioned manual valve 104 assumes. The shift reference switch 1298 is turned on when the sleeve 1182 of the before mentioned shift operating mechanism 1112 has come to a position corresponding to the largest reduction ratio. The engine coolant temperature 306 generates a signal when the engine coolant temperature is lower than a predetermined value. The brake sensor 307 detects the application of one of the foot operated brake FB and the parking brake PB. The brake sensor 307 is in the form of a circuit which is closed upon detecting the application of one of the brakes FB and PB. The signals generated by the engine revolution speed sensor 301 and vehicle speed sensor 302 are sent to an input interface 311 after passage through wave shapers 308 and 309, respectively, and the electric voltage from the throttle opening degree sensor (or intake manifold vacuum sensor) 303 is converted at an A/D converter 310 into a digital signal before being sent to the input interface 311. The control unit 1300 includes the input interface 311, a reference pulse generator 312, a CPU (Central Processor Unit) 313, a ROM (Read Only Memory) 314, a RAM (Randam Access Memory) 315, and an output interface 316, which are linked with each other by an address bus 319 and a data bus 320. The reference pulse generator 312 generates a reference pulse which actuates the CPU 313. The ROM 314 stores programs necessary for controlling the stepper motor 1110 and force motor 1224 and data necessary for controlling them. The RAM stores various parameters necessary for processing information from each of the sensors and switches and those necessary for control. Output signals from the shift control apparatus 300 are sent out to the stepper motor 1110 and force motor 1224 via amplifier 317 and electric current controller 318, respectively.

The actual control of the force motor 1224 carried out by this control unit 1300 is described. Although the control unit 1300 controls the stepper motor 1110, the description as to how the stepper motor 1110 is controlled is omitted because it is less related to the present invention. The description of that portion which has not been described is found in the before mentioned U.S. patent application Ser. No. 543,838.

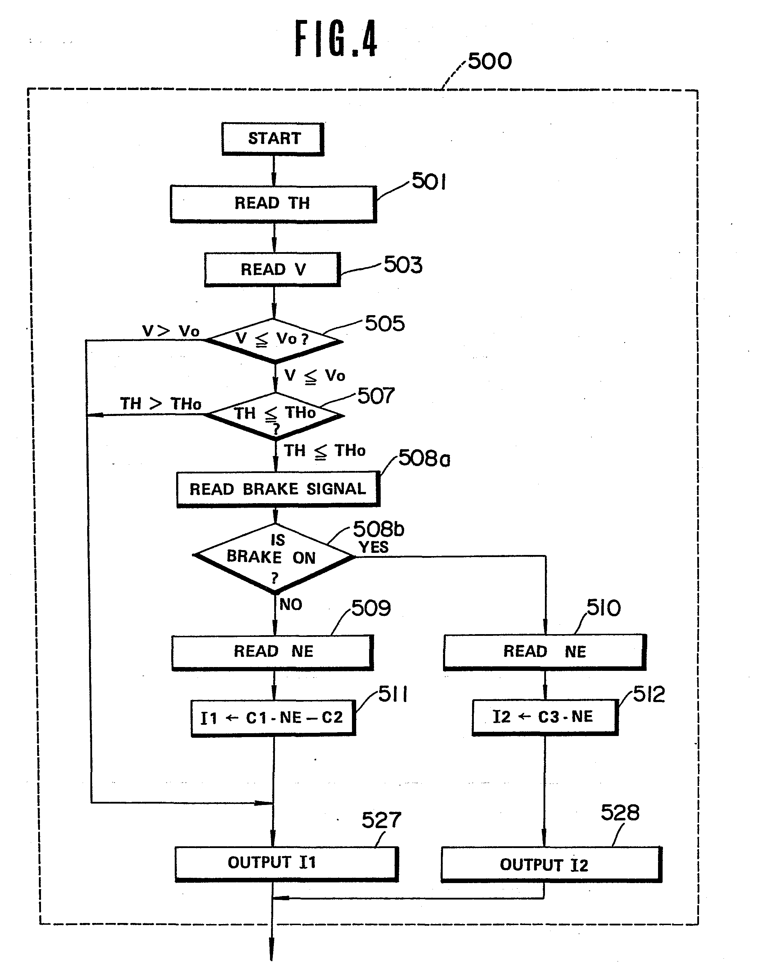

Referring to Fig. 4, a control routine 500 for a force motor 1224 is described. The force motor control routine 500 has a function to place the forward clutch 1004 (or the reverse clutch 1024) in the predetermined slightly engaged state by regulating a start pressure via the start adjusting valve 1118 and the starting valve 2116 when the foot operated brake FB and the parking brake PB are both released under a condition where the engine is idling when the vehicle is at a standstill, and to completely release the clutch 1004 or 1024 when one of the brakes FB and PB is applied under this condition. The execution of this force motor control routine 500 is repeated after a predetermined time (i.e., the following routine 500 is repeatedly executed within a short period of time).

First of all, a throttle opening degree TH is read in from the throttle opening degree sensor 303 (in a step 501), and a vehicle speed V is read in from the vehicle speed sensor 302 (in a step 503). A determination is made whether the vehicle speed V is less than the predetermined small value Vo or not. If it is less than or equal to the predetermined small value Vo, the program proceeds to a step 507 where a determination is made whether the throttle opening degree TH is less than a predetermined small value THo or not. If it is less than or equal to the predetermined small value THo (that is, when the vehicle is at a standstill and the engine idles), the program proceeds to a step 508a where the brake operation indicative signal is read in from the brake sensor 306. The brake sensor 306 detects the application of one of the foot operated brake FB and the parking brake PB. If both the foot brake FB and the parking brake PB are not used or released, the program proceeds to a step 509, while if used, the program proceeds to a step 510. If in the step 505 or in the step 509, V is greater than Vo or TH is greater than THo, the program proceeds to a step 527 where the same force motor electric signal I1 as that in the preceding routine is sent out, i.e., the electric current signal I1 sent out immediately before the state where V is greater than Vo or TH is greater than THo is accomplished is sent out again.

In the step 510, an engine speed NE is read in from the engine revolution speed sensor 301. Subsequently, in a step 512 the force motor electric current signal I2 is given C3·NE. Since C3 is a constant having a large value and I2 is a relatively large value, the start adjustment pressure takes a relatively high oil pressure (this causes the start pressure to have a low oil pressure, thus completely releasing the clutch). As long as it provides the start pressure low enough to release the clutch, the force motor electric current I2 may be computed or set in any desired manner. After the execution of the step 512, the program proceeds to a step 528 where the above mentioned force motor electric signal I2 is sent out.

On the other hand, after engine speed NE was read in in the step 509, the program proceeds to a step 511 where the force motor electric signal I1 is computed in the following manner. The force motor electric signal I1 can be expressed by

$$I1 = C1 \cdot NE - C2 \ ... \ (1).$$

C1 and C2 are constants which will be described later.

With the electric current signal I1 expressed as above, the start pressure Ps becomes a predetermined value which is determined by the spring 208 as will be described hereinafter.

The equilibrium state of the start valve 116 can be expressed by an equation as follows:

$$As \cdot Ps = AE \cdot PE - Ac \cdot Pc + F \ .......... \ (2)$$

where:

As:  Pressure acting area of land 206a

AE:  Pressure acting area of land 206d

Ac:  Differential area between lands 206c and 206b

Ps:  Start pressure

PE:  Engine revolution speed signal oil pressure

Pc:  Start adjustment pressure

F :  Force of spring 208.

PE and Pc are given by the following equations:

$$PE = a \cdot NE^2 \quad \ldots\ldots\ldots\ldots \quad (3)$$

$$Pc = b \cdot I1^2 + C \cdot I1 \quad \ldots\ldots\ldots\ldots \quad (4)$$

(a, b and c are constans)

The before mentioned C1 and C2 are given by the following equations, respectively,

$$C1 = (AE \cdot a)/(Ac \cdot b) \quad \ldots\ldots\ldots\ldots \quad (5)$$

$$C2 = c/2b \quad \ldots\ldots\ldots\ldots \quad (6).$$

If the above equations (5) and (6) are put into the equation (1),

$$I1 = (AE \cdot a)/(Ac \cdot b) \cdot NE - c/2b \quad \ldots\ldots\ldots\ldots \quad (7).$$

If this equation (7) is put into the equation (4),

$$Pc = b \cdot (NE^2 \cdot (AE \cdot a)/(Ac \cdot b) - c^2/4b^2).$$

Neglecting $c^2/4b^2$,

$$Pc = NE^2 \cdot (AE \cdot a \cdot b)/(Ac \cdot b) \quad \ldots\ldots\ldots\ldots \quad (8).$$

If PE and Pc as expressed in the equations (3) and (8) are put into the equation (2),

$$As \cdot Ps = F.$$

Thus,

$$Ps = F/As.$$

Therefore, the start pressure Ps becomes a constant determined by F and As.  The values F and As are set such that the start pressure Ps becomes an oil pressure which places the clutch in slightly engaged

state.

After the electric signal I1 as expressed by the equation (1) is computed in a step 511, the program proceeds to a step 527 where the electric signal I1 is sent out.

As will now be understood, the start pressure Ps is kept at an oil pressure which places the forward clutch 1004 (or the reverse clutch 1024) in the slightly engaged state as a result of the process along step 508a → 508b → 509 → 511 → 527. Thus, if the engine speed increases in this state, the start pressure Ps takes a value resulting from adding to the above mentioned constant pressure an oil pressure which corresponds to the engine speed, thus engaging the forward clutch 1004 (or the reverse clutch 1024), thereby enabling the vehicle to move off from a standstill. This provides a stable starting operation of the vehicle without engine racing nor unintentional starting irrespective of variation in engine idle speed. This is because the start pressure Ps is so controlled as to always place the clutch in the slightly engaged state irrespective of idle speed due to the above mentioned effect although the idle speed of the engine deviates from a normal preset value when the choke is used or the cooler is used or the engine operates irregularly.

On the other hand, by the process along step 508a → 508b → 510 → 512 → 528, the clutch is completely released when the brake is applied (that is, in the case where the starting of the vehile is less likely to take place immediately). Therefore, since the traction torque by the clutch is zero and the load on the engine becomes small, it is possible to set the idle speed of the engine low.

Even if starting operation takes place while the brake is being applied, the program proceeds directly to the step 527 from the step 505 or 507 so as to send out the force motor electric current I1 obtained during the preceding routine where the brake was not used. As a result, the start pressure Ps rises immediately to a pressure value which places the clutch in slightly engaged state. Therefore, no inconvenience takes place.

A second embodiment is hereinafter described referring to Figs. 1, 2A, 2B, 5 and 6.

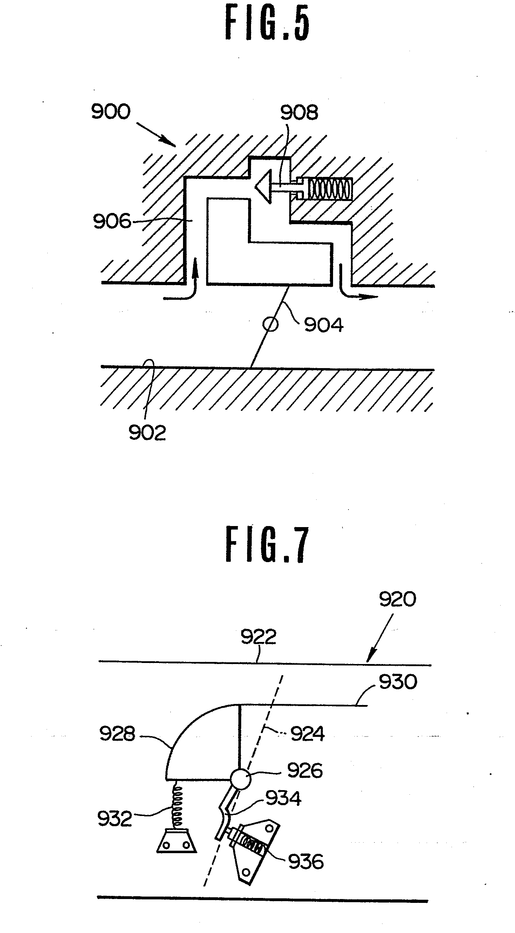

The second embodiment is similar to the first embodiment but different from the latter in that it has an idle adjusting device 900 and an electric amplifier 322 which are shown in Fig. 3 by phantom lines. Referring to Fig. 5, the idle adjusting device 900 is described.

Accoring to this device 900, bypassing a throttle valve 904 in an intake manifold 902 of an engine, a bypass passage 906 is arranged. The rate of fluid flow passing through the bypass passage 906 is controlled by an electromagnetic valve 908. The electromagnetic valve 908 adjusts the cross sectional area of the bypass passage 906 in response to an electric current signal supplied thereto by the control unit 1300 via the current amplifier 322. As the cross sectional area of the bypass passage 906 increases, the flow rate of air admitted to the engine increases, causing an increase in the idle speed, whereas as the cross sectional area decreases, the flow rate of air supplied to the engine decreases, causing a drop in the idle speed accordingly.

-16-

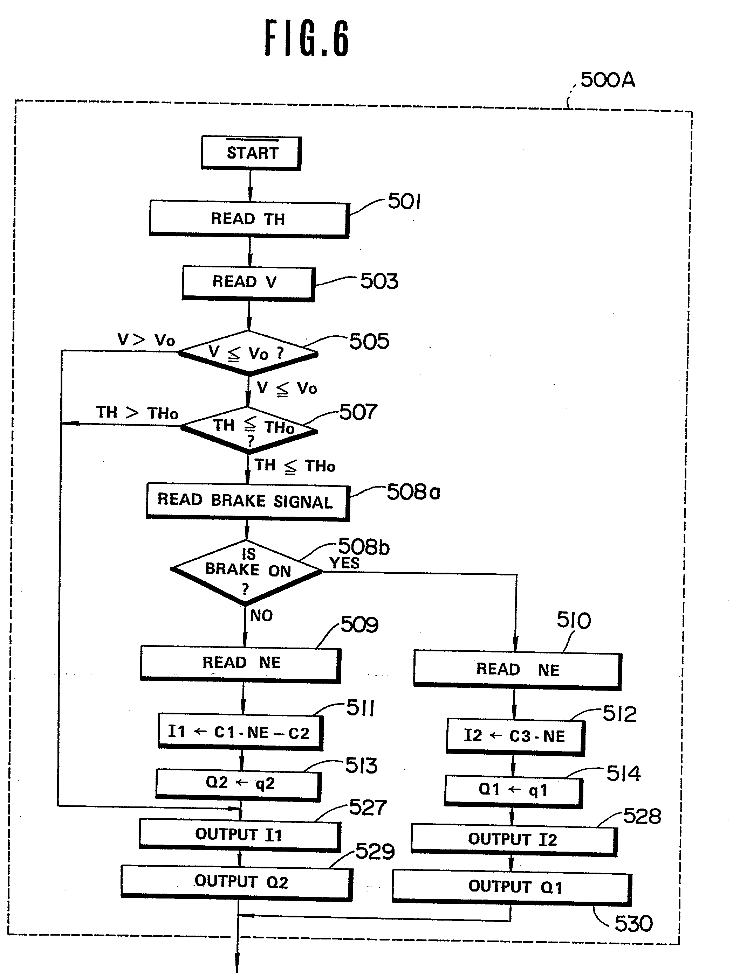

Referring to Fig. 6, a force motor and idle adjusting device control routine 500A is described. With the force motor and idle adjusting device control routine 500A, when the brake is released under a condition where the engine idles and the vehicle is at a standstill, the forward clutch 1004 (or reverse clutch 1024) is placed in a predetermined slightly engaged state and at the same time, the idle speed is increased by the idle adjusting device 900. When, on the other hand, the brake is applied under the same condition, the clutch is completely released and at the same time, the idle speed is decreased by the idle adjusting device 900.

This control routine is substantially the same as the control routine 500 shown in Fig. 4, but it is different from the latter in the provision of new steps 513, 529 disposed in a flow of process executed when a brake is released in a step 508b and new steps 514, 530 disposed in a flow of process which is executed when the brake is applied in the step 508b.

If it has been determined after executing steps 501, 503, 505, 507 and 508a, that the engine is idling and the vehicle is at a standstill, the step 508b is executed where a determination is made whether the brake, i.e., the foot operated brake or the parking brake, is ON (applied) or not (released). If the brake is released, the program proceeds to a step 509, whereas if it is applied, the program proceeds to a step 510. If, in the step 505 or in the step 509, the vehicle speed V is greater than a predetermined small value Vo or the throttle opening degree TH is greater than a predetermined small value THo, the program proceeds to a step 527 and then to a step 529 where in these steps the same force motor electric signal I1 and idle adjusting electric signal Q2 as those in the preceding routine are sent out, i.e., the electric current signal I1 and the idle adjusting electric signal Q2 sent out immediately before the state where V is greater than Vo or TH is greater than THc is accomplished are sent out again.

After the force motor electric current signal I2 is given C3·NE in a step 512, the idle adjusting electric signal Q1 is given a value q1 in the step 514. When this electric signal value q1 is given, the idle adjusting device 900 adjusts the engine to operate at a low idle speed. After the execution of the step 514, the program proceeds to a step 528 where the above mentioned force motor electric signal I2 is produced. Subsequently, in a step 530, the idle adjusting electric signal Q1 is sent out. Due to this control, the clutch is completely released and at the same time the engine is adjusted to operate at a low idle speed.

On the other hand, after the engine revolution speed NE was read in in the step 509, the program proceeds to a step 511 where the electric signal I1 as expressed by the equation (1) is computed, and the program proceeds to the step 513 where the idle adjusting electric signal Q2 is given a value q2. When the electric signal value q2 is given, the idle adjusting device 900 adjusts the engine to operate at a high idle speed. Subsequently, the program proceeds to the step 527 where the force motor electric signal I1 is sent out and in the subsequent step 529, the idle adjusting electric signal Q2 is sent out. Due to this control, the clutch is slightly engaged and at the same time the engine is adjusted to operate at the high idle speed.

As will now be understood, the start pressure Ps is so controlled as to always place the forward clutch 1004 (or the reverse clutch 1024) in a predetermined slightly engaged state and the idle speed is set high enough not to cause the engine to stall as a result of the process along step 508a → 508b → 509 → 511 → 513 → 527 → 529. Thus, if the engine speed increases in this state, the start pressure Ps takes a value resulting from adding to the above mentioned constant pressure an oil pressure which corresponds to the engine speed, thus engaging the forward clutch 1004 (or the reverse clutch 1024), thereby enabling the vehicle to move off from a standstill.

On the other hand, by the process along step 508a → 508b → 510 → 512 → 514 → 528 → 530, the clutch is completely released when the brake is applied (that is, in the case where the starting of the vehile does not take place immediately) and the low idle speed is set. Therefore, since the traction torque by the clutch is zero and the load on the engine becomes small, it is possible to set the idle speed low, resulting in a reduction in fuel consumption rate.

Although in the second embodiment, the idle adjusting device 900 of the type wherein the flow cross sectional area of the bypass passage is adjustable is used, an idle adjusting device 920 of the type wherein the opening degree of the throttle valve is variable may be used.

Referring to Fig. 7, the device 920 comprises a throttle valve 924 mounted to an intake manifold 922 is pivotable about a pin 926 and integral with an accelerator drum 928. · The accelerator drum 928 is directly connected via a wire 930 to an accelerator pedal, not shown. Besides, the accelerator drum 928 is subjected to a constant bias force, in one direction, by the spring 932. Also provided is a lever 934 integrally rotatable with the throttle valve 924. This lever 934 abuts with a adjustable stopper 936 capable of stopping the throttle valve 924 in a predetermined position. Therefore, by adjusting the stop position by the stopper adjustment device 936 using electromagnetic force, the opening degree of the throttle valve 924 at idle operation can be adjusted.

The idle adjusting device may take another form, such as a device which can switch the idle speed between a relatively high level and a relatively low level.

## CLAIMS

1. A control device for a vehicle having a foot operated brake, a parking brake, an engine with a throttle which opens in degrees, and a hydraulic automatic clutch, the control device comprising:

a vehicle speed sensor means for detecting a vehicle speed of the vehicle and generating a vehicle speed indicative signal;

a throttle opening degree sensor means for detecting a throttle opening degree of the throttle and generating a throttle opening degree indicative signal;

a brake sensor means for detecting the application of one of the foot operated brake and the parking brake and generating a brake operation indicative signal;

first control means operable responsive to absence of said brake operation indicative signal under a condition where said vehicle speed indicative signal is less than a predetermined value and said throttle opening degree indicative signal is less than another predetermined value for placing the engine in a first predetermined idle operation state; and

second control means operable responsive to presence of said brake operation indicative signal under said condition where said vehicle speed indicative signal is less than said predetermined value and said throttle opening degree indicative signal is less than said another predetermined value for placing the engine in a second predetermined idle operation state.

2. A control device as claimed in claim 1, wherein said first control means includes:

a source of pressurized fluid;

a pre-start pressure regulating means communicating with said source of pressurized fluid for regulating fluid supply to and fluid discharge from the hydraulic automatic clutch so as to keep the hydraulic automatic clutch in a predetermined slightly engaged state; and

said second control means includes:

means for modifying fluid pressure supplied to the hydraulic automatic clutch so as to completely release the hydraulic automatic clutch.

3.  A control device as claimed in claim 2, wherein said first control means further includes:

means for adjusting the engine to operate at a first idle speed when said pre-start pressure regulating means is in operation; and

said second control means further includes:

means for adjusting the engine to operate at a second idle speed which is lower than said first idle speed when said fluid pressure modifying means is in operation.

4.  A control device for a vehicle having a foot operated brake, a parking brake, an engine with a throttle which opens in degrees, and a hydraulic automatic clutch, the control device comprising:

means for placing the engine in a first predetermined idle operation state where the hydraulic automatic clutch is in a predetermined slightly engaged state when the foot operated brake and the parking brake are both released under a

-22-

condition where the engine is idling and the vehicle is at a standstill; and

means for placing the engine in a second predetermined idle operation state where the hydraulic automatic clutch is completely released when one of the foot operated brake and the parking brake is applied under said condition where the engine is idling and the vehicle is at a standstill.

5.   A control device for a vehicle having a foot operated brake, a parking brake, an engine with a throttle which opens in degrees, and a hydraulic automatic clutch, the control device comprising:

means for placing the engine in a first predetermined idle operation state where the hydraulic automatic clutch is in a predetermined slightly engaged state and the engine is adjusted to operate at a first idle speed when the foot operated brake and the parking brake are both released under a condition where the engine is idling and the vehicle is at a standstill; and

means for placing the engine in a second predetermined idle operation state where the hydraulic automatic clutch is completely released and the engine is adjusted to operate at a second idle speed which is lower than said first idle speed when one of the foot operated brake and the parking brake is applied under said condition where the engine is idling and the vehicle is at a standstill.

6.   A control method for a vehicle having a foot operated brake, a parking brake, an engine with a throttle which opens in degrees, and a hydraulic automatic clutch, the control method comprising:

placing the engine in a first predetermined idle operation state when the foot operated brake and the parking brake are both released under a condition where the engine is idling and the vehicle is at a standstill; and

placing the engine is a second predetermined idle operation state when one of the foot operated brake and the parking brake is applied under said condition where the engine is idling and the vehicle is at a standstill.

7. A control method as claimed in claim 6, wherein, in said first predetermined idle operation state, the hydraulic automatic clutch is in a predetermined slightly engaged state, and in said second predetermined idle operation state, the hydraulic automatic clutch is completely released.

8. A control method as claimed in claim 7, wherein in said first predetermined idle operation state, the engine is adjusted to operate at a first idle speed, and in said second predetermined idle operation state, the engine is adjusted to operate at a second idle speed which is lower than said first idle speed.

0127085

# FIG.1

FIG.2A

Labels visible in figure: FORWARD CLUTCH, REVERSE CLUTCH, DRIVE PULLEY, DRIVEN PULLEY, PITOT TUBE (REV. SPEED OF DRIVE PULLEY), PITOT TUBE (REV. SPEED OF ENGINE)

PRNDL

2/7

FIG.2B

3/7

0127085

# FIG.3

FIG.3 — Block diagram (1300)

- ENGINE REVOLUTION SPEED SENSOR (301) → WAVE SHAPER (308) → INPUT INTERFACE (311)
- VEHICLE SPEED SENSOR (302) → WAVE SHAPER (309) → INPUT INTERFACE
- THROTTLE OPENING DEGREE SENSOR (INTAKE MANIFOLD VACUUM SENSOR) (303) → A/D CONVERTER (310) → INPUT INTERFACE
- SHIFT POSITION SWITCH (304) → INPUT INTERFACE
- SHIFT REFERENCE SWITCH (1298) → INPUT INTERFACE
- ENGINE COOLANT TEMPERATURE SENSOR (306) → INPUT INTERFACE
- BRAKE SENSOR (307) → INPUT INTERFACE

REFERENCE PULSE GENERATOR (312) → CPU (313)

OUTPUT INTERFACE (316) → AMPLIFIER (317) → 1110 STEPPER MOTOR (317a, 317b, 317c, 317d)

CURRENT CONTROLLER (318) → FORCE MOTOR (1224)

CURRENT CONTROLLER (322) → IDLE ADJUST. DEVICE (900)

ROM (314), RAM (315), ADDRESS BUS (319), DATA BUS (320)

# FIG.4

```
                    ┌─────────┐
                    │  START  │
                    └─────────┘
                         │
                         ▼
              ┌──────────────────────┐
              │       READ TH        │──── 501
              └──────────────────────┘
                         │
                         ▼
              ┌──────────────────────┐
              │       READ V         │──── 503
              └──────────────────────┘
                         │
                         ▼
   V > Vo              ╱──────╲           505
◀──────────────────  ╱ V ≦ Vo ?╲ ────────
                      ╲────────╱
                         │ V ≦ Vo
                         ▼
  TH > THo            ╱────────╲          507
◀──────────────────  ╱ TH ≦ THo ╲────────
                      ╲    ?    ╱
                      ╲────────╱
                         │ TH ≦ THo
                         ▼
              ┌──────────────────────┐    508a
              │  READ BRAKE SIGNAL   │────
              └──────────────────────┘
                         │
                         ▼
                      ╱──────╲      508b
                     ╱   IS   ╲     YES
                    ╱ BRAKE ON ╲────────────┐
                     ╲    ?    ╱             │
                      ╲──────╱               │
                         │ NO                │
```

| $I1 \leftarrow C1 \cdot NE - C2$  — 511 | $I2 \leftarrow C3 \cdot NE$  — 512 |

```
   READ NE ── 509           READ NE ── 510

   I1 ← C1·NE − C2 ── 511    I2 ← C3·NE ── 512

              527                    528
   ┌──────────────────┐    ┌──────────────────┐
   │    OUTPUT I1     │    │    OUTPUT I2     │
   └──────────────────┘    └──────────────────┘
```

500

0127085

# FIG.5

# FIG.7

# FIG.6

500A

```
                    ┌──────────┐
                    │  START   │
                    └────┬─────┘
                         │
              ┌──────────▼──────────┐
              │      READ TH        │────501
              └──────────┬──────────┘
                         │
              ┌──────────▼──────────┐
              │      READ V         │────503
              └──────────┬──────────┘
                         │
    V > Vo         ◇─────▼─────◇
   ◄───────────────  V ≦ Vo ?   ────505
              │      ◇───────────◇
              │           │ V ≦ Vo
   TH > THo   │      ◇────▼────◇
   ◄──────────┼──────  TH ≦ THo  ────507
              │      ◇─────?────◇
              │           │ TH ≦ THo
              │  ┌────────▼──────────┐
              │  │  READ BRAKE SIGNAL │────508a
              │  └────────┬──────────┘
              │           │
              │      ◇────▼────◇
              │      │   IS    │────508b
              │      │ BRAKE ON│  YES
              │      ◇────?────◇──────────────┐
              │           │ NO                │
              │  ┌────────▼──────┐    ┌───────▼────────┐
              │  │   READ NE     │509 │   READ  NE     │510
              │  └────────┬──────┘    └───────┬────────┘
              │           │                   │
              │  ┌────────▼──────┐    ┌───────▼────────┐
              │  │ I1 ← C1·NE − C2│511 │  I2 ← C3·NE    │512
              │  └────────┬──────┘    └───────┬────────┘
              │           │                   │
              │  ┌────────▼──────┐    ┌───────▼────────┐
              │  │   Q2 ← q2     │513 │   Q1 ← q1      │514
              │  └────────┬──────┘    └───────┬────────┘
              │           │                   │
              │  ┌────────▼──────┐    ┌───────▼────────┐
              └──►  OUTPUT I1    │527 │   OUTPUT I2    │528
                 └────────┬──────┘    └───────┬────────┘
                 ┌────────▼──────┐    ┌───────▼────────┐
                 │  OUTPUT Q2    │529 │   OUTPUT Q1    │
                 └────────┬──────┘    └───────┬────────┘
                          │                   │  530
                          │◄──────────────────┘
                          ▼
```